# FASCICULE DE BREVET EUROPEEN

(11) **EP 3 893 063 B1**
(45) Date de publication et mention de la délivrance du brevet: **17.08.2022**
(21) Numéro de dépôt: 20168217.6
(22) Date de dépôt: 06.04.2020
(51) Int. Cl.: G04C 3/00

(54) **DISPOSITIF DE CONTRÔLE DE FONCTIONS D'UNE MONTRE**
KONTROLLVORRICHTUNG DER FUNKTIONEN EINER ARMBANDUHR
DEVICE FOR CONTROLLING FUNCTIONS OF A WATCH

(43) Date de publication de la demande: 13.10.2021
(73) Titulaire: ETA SA Manufacture Horlogère Suisse, 2540 Grenchen (CH)
(72) Inventeur: ZANESCO, Vittorio, 2000 Neuchâtel (CH); PORCHERIE, Damien, 01170 Vesancy (FR); HÊCHE, Louis, 2800 Delémont (CH)
(74) Mandataire: ICB SA

## Description

### DOMAINE TECHNIQUE

L'invention se rapporte à un dispositif de contrôle de fonctions d'une montre. Le dispositif de contrôle comprend une couronne et une tige liée à la couronne disposée d'un côté extérieur d'une boîte de montre. La tige agit sur des moyens du dispositif de contrôle disposés à l'intérieur de la boîte de montre, pour activer ou sélectionner une ou plusieurs fonctions.

### ARRIERE-PLAN TECHNOLOGIQUE

Généralement, un dispositif de contrôle, qui comprend une couronne électronique liée à une tige, est d'une taille relativement importante et ne comporte que deux positions d'action à savoir une position de repos et une position de contrôle d'au moins une fonction à exécuter. Il est cherché de pouvoir réaliser un tel dispositif de contrôle de petite taille facilement intégrable dans un petit calibre de montre et comprenant plus de deux positions de contrôle de fonctions à exécuter.

Le brevet US 10,203,662 B1 décrit un dispositif électronique, qui comprend une couronne liée à une tige d'une montre. Ce dispositif électronique comprend une source de lumière pour transmettre des faisceaux de lumière sur une surface inclinée d'extrémité de la tige à l'intérieur de la montre. Les faisceaux de lumière sont réfléchis et renvoyés en direction de photorécepteurs. Il n'est par contre rien mentionné sur l'action d'autres organes de contrôle liés notamment à la tige pour exécuter des fonctions selon plus de deux positions de contrôle de la tige.

La demande de brevet EP 3 015 925 A1 décrit une tige couronne d'une montre susceptible d'être bougée axialement le long d'un axe longitudinal ou tournée autour de cet axe longitudinal. Pour la détection de la position de la tige couronne, une source de lumière illumine une portion de la tige couronne et un détecteur de lumière reçoit la lumière diffractée ou réfléchie de la tige couronne. Un processeur est prévu pour traiter deux motifs à pixels successifs du détecteur pour déterminer la lumière réfléchie afin de définir un mouvement de la tige couronne. Cependant uniquement une détection optique ne permet pas de bien différencier un mouvement axial d'un mouvement rotatif.

Les brevets GB 1 471 834 et US 3,975,897 décrivent une détection de fonctions d'une montre par l'action d'une tige couronne à détection électromécanique. Cependant uniquement une détection électromécanique axiale est effectuée, ce qui limite des possibilités de détection.

L'objet de la présente invention est donc de surmonter les problèmes identifiés ci-dessus liés à un dispositif de contrôle de fonctions d'une montre.

### RESUME DE L'INVENTION

La présente invention propose donc un dispositif de contrôle de fonctions d'une montre, comme expliqué plus en détails plus loin en utilisant des moyens optiques et électroniques pour exécuter des fonctions. De plus, le dispositif de contrôle est conçu pour être facilement intégré dans le mouvement horloger mécanique ou électromécanique.

A cet effet, la présente invention concerne un dispositif de contrôle de fonctions d'une montre selon la revendication indépendante 1.

Un avantage du dispositif de contrôle de fonctions d'une montre réside dans le fait que le dispositif est conçu avec des éléments ne prenant que peu d'espace notamment en hauteur de manière à être ultraplat et permettre une intégration facile dans une montre à petit calibre tout en conservant une méthode d'emboîtage traditionnelle.

Avantageusement, le dispositif comprend principalement une couronne liée à une tige, qui peut être déplacée de préférence dans une direction rectiligne pour occuper trois positions déterminées T0, T1 et T2 afin d'actionner au moins un et de préférence au moins deux contacteurs électriques d'un assemblage mécanique électronique, et une extrémité intérieure pour agir sur un système d'action optique pour la détermination du sens de rotation de la tige. Une pièce de sélection notamment métallique est montée rotative autour d'un axe de rotation fixé sur un support, et est entraînée en rotation par un élément guide, tel qu'une tirette, monté rotatif autour d'un autre axe sur le support. Cet élément guide comprenant une extrémité arrondie venant dans une rainure circulaire de la tige pour être déplacé selon la position de la tige d'une position à une autre position et permettre aux deux contacteurs de la pièce de sélection de contacter soit une première borne électrique ou une seconde borne électrique ou aucune borne électrique définissant une des positions de la tige. Le contact électrique à l'une ou l'autre des bornes électriques commande chaque interrupteur ou micro-rupteur lié à chaque borne électrique. De préférence, le contact électrique d'un des contacteurs à une des bornes électriques est une mise à la masse comme pour la platine supportant le mouvement horloger. Cependant, il peut aussi être envisagé d'avoir le contact électrique lié à la tension d'alimentation notamment d'une pile d'alimentation de la montre.

Avantageusement, le système optique comprend un disque codé, qui est monté rotatif dans un bâti ou couvercle en plastique et entraîné en rotation dans la troisième position T2 de la tige, et deux photo-réflecteurs disposés en regard du disque. Le disque d'un matériau de base absorbant la lumière comprend soit des ouvertures à travers l'épaisseur de préférence régulièrement réparties et espacées pour une réflexion de lumière sur une surface réfléchissante du couvercle au-dessus des ouvertures, soit des secteurs réfléchissant la lumière sur la surface du disque, qui sont régulièrement répartis et espacés. Chaque photo-réflecteur, placé en des positions bien définies sur une plaque à circuit imprimé, transmet de la lumière vers le disque et détecte la lumière réfléchie pour obtenir deux signaux en quadrature déterminant le sens de rotation.

Le système optique est plus avantageux qu'une solution magnétique, car il utilise un encombrement réduit.

Ainsi les éléments mécaniques pour actionner les contacteurs, les commutateurs ou interrupteurs et le disque de détection optique sont dans le plan et ne prennent, que peu d'espace en hauteur donc ultraplat. Une hauteur de l'ordre de 3 mm du calibre comprenant le mouvement horloger avec le dispositif de contrôle de fonctions peut être obtenue.

D'autres aspects de la présente invention sont définis dans les revendications dépendantes.

### BREVE DESCRIPTION DES FIGURES

Les buts, avantages et caractéristiques d'un dispositif de contrôle de fonctions d'une montre apparaîtront mieux dans la description suivante de manière non limitative en regard des dessins sur lesquels :
- la figure 1 représente une vue tridimensionnelle partiellement en éclaté d'une première forme d'exécution du dispositif de contrôle de fonctions d'une montre selon l'invention,
- la figure 2 représente une vue tridimensionnelle partiellement en éclaté d'une seconde forme d'exécution du dispositif de contrôle de fonctions d'une montre selon l'invention,
- la figure 3 représente un graphique des signaux lumineux captés par chaque photo-réflecteur montrant la quadrature des signaux en sortie en fonction de la position de chaque photo-réflecteur par rapport à un disque à ouverture ou à surfaces réfléchissantes des signaux lumineux transmis par les photo-réflecteurs du dispositif selon l'invention,
- les figures 4a, 4b, 4c représentent une vue de dessus simplifiée des trois positions de déplacement de la tige du dispositif selon l'invention,
- la figure 5 représente une coupe longitudinale le long de l'axe de la tige représentant le dispositif de contrôle de fonctions selon la première forme d'exécution ou la seconde forme d'exécution dans la troisième position de la tige actionnant le système optique selon l'invention,
- la figure 6 représente une vue de dessus des éléments pour l'indexation mécanique de la tige du dispositif de contrôle de fonctions selon l'invention, et
- la figure 7 représente une coupe verticale au niveau du système optique de la première forme d'exécution du dispositif de contrôle de fonctions montrant le fonctionnement de détection du sens de rotation de la tige selon l'invention.

### DESCRIPTION DETAILLEE DE L'INVENTION

Dans la description suivante, tous les composants d'un dispositif de contrôle de fonctions d'une montre, qui sont bien connus de l'homme du métier dans ce domaine technique ne sont relatés que de manière simplifiée. Le dispositif de contrôle de fonctions comprend principalement une couronne liée à une tige actionnant des moyens de sélection des fonctions dans la montre. La montre peut être une montre électromécanique, voire une montre mécanique. On entend par fonction, toute opération effectuée dans la montre modifiant par exemple l'indication de l'heure ou de la date, ou pour effectuer des mesures par un ou plusieurs capteurs ou d'autres fonctions ou opérations par l'action de la tige liée à la couronne.

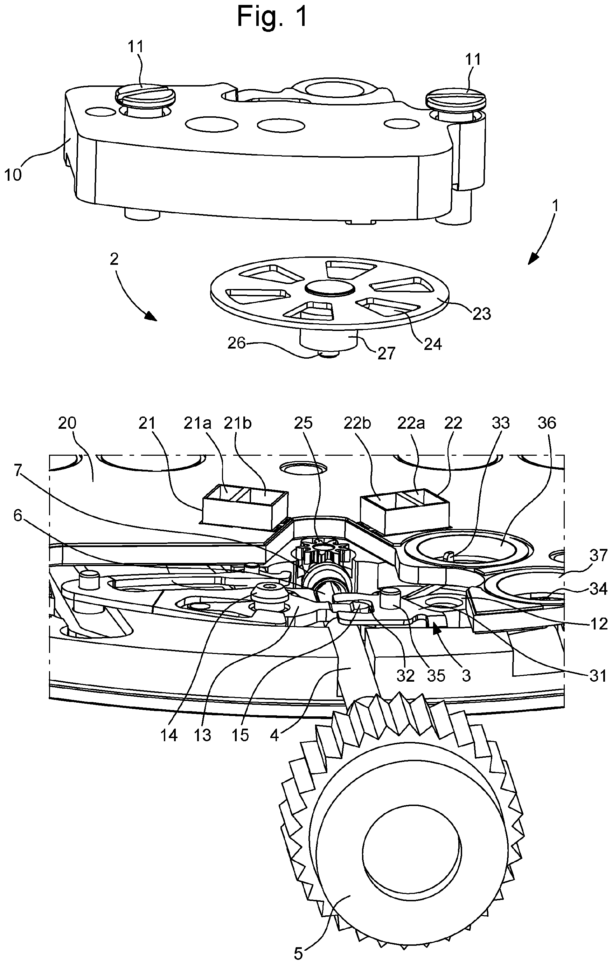

La figure 1 représente une première forme d'exécution du dispositif 1 de contrôle de fonctions. Le dispositif 1 de contrôle comporte principalement une couronne 5 liée à une tige 4, qui peut être déplacée de préférence dans une direction rectiligne de manière à occuper une des trois positions déterminées définies T0, T1, T2 afin d'actionner un agencement mécanique électronique 3 et un système d'action optique 2 dans une des positions déterminées définies. Cet agencement mécanique électronique 3 comprend au moins un contacteur 33 et de préférence comme montré à la figure 1, au moins deux contacteurs 33, 34 d'une pièce de sélection 31, dont un corps principal de forme plane est monté autour d'un axe 35 de rotation sur un support 12 généralement lié directement à une platine de montage du mouvement horloger de la montre. La pièce de sélection 31, qui peut être en matériau métallique ou conducteur d'électricité, est entraînée en rotation autour de son axe 35 par un élément guide 13 monté rotatif autour d'un axe 14 sur le support 12. L'élément guide 13, qui peut être métallique, est défini comme une tirette. L'élément guide 13, de forme généralement plane, comprend une extrémité arrondie 15, qui vient se placer dans une ouverture 32 en forme de U d'une extrémité du corps de la pièce de sélection 31, qui est au-dessus d'une portion centrale de la tige 4. L'extrémité arrondie 15 de l'élément guide 13, qui est d'une épaisseur plus importante que l'épaisseur de l'extrémité en forme de U de la pièce de sélection 31, est disposée également dans une rainure annulaire réalisée sur la portion centrale de la tige 4. De ce fait, sous l'action du mouvement rectiligne de la tige 4 dans l'une ou l'autre des trois positions définies, l'élément guide 13 tourne autour de son axe 14 et ainsi entraîne la pièce de sélection 31 en rotation autour de l'autre axe 35 pour déplacer le contacteur 33 ou les contacteurs 33, 34. L'élément guide 13 est donc disposé en dessous et parallèlement au corps de la pièce de sélection 31, généralement aussi parallèle au plan de montre.

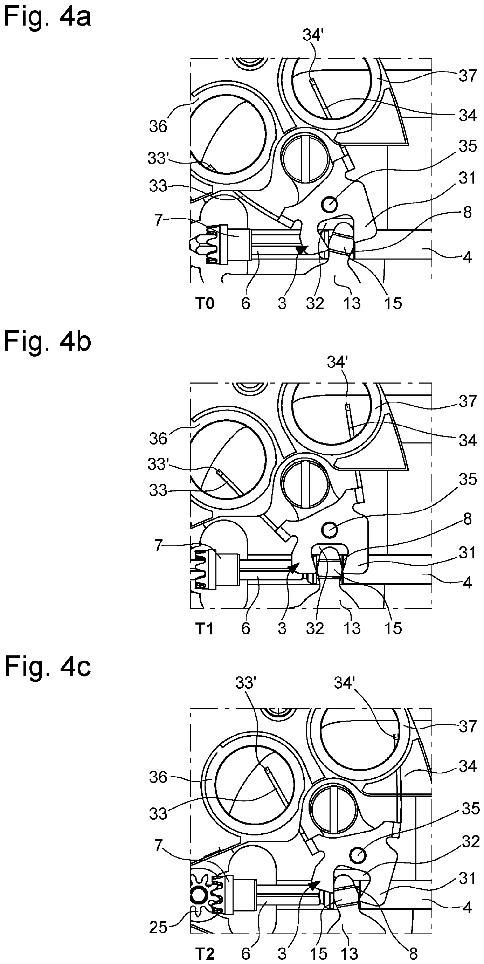

Ces contacteurs 33, 34 sont de préférence des lames métalliques pour assurer un contact électrique contre des bornes électriques 36, 37, qui sont, par exemple, des trous métallisés réalisés dans une plaque à circuit imprimé 20. Les contacteurs 33, 34 se trouvent d'un côté opposé à l'ouverture 32 en forme de U. Une extrémité de chaque contacteur 33 et 34 est reliée au corps principal de la pièce de sélection 31 en léger décalage en dessous du corps et parallèlement au corps de cette pièce de sélection 31, et en dessous parallèlement de la plaque à circuit imprimé 20. Un premier contacteur 33 est destiné à venir en contact d'une première borne électrique 36 du premier trou métallisé sur tout son bord circulaire intérieur dans une première position T0 de la tige 4 tirée vers l'extérieur de la boîte de montre. Un second contacteur 34 est destiné à venir en contact d'une seconde borne électrique 37 du second trou métallisé sur tout son bord circulaire intérieur dans une troisième position T2 de la tige 4 poussée vers l'intérieur de la boîte de montre. Dans une seconde position intermédiaire T1 de la tige 4, les deux contacteurs 33, 34 ne sont pas en contact avec les bornes électriques 36, 37. Les trous sont d'un diamètre suffisamment large pour permettre un trajet suffisant de chaque extrémité des contacteurs 33, 34 pour venir en contact de la première borne électrique 36 ou de la seconde borne électrique 37. Plus de détails en liaison à ces trois positions de la tige 4 sont expliqués ci-après en référence aux figures 4a, 4b et 4c.

Dans la position T2 de la tige 4, le système d'action optique 2 est activé. Pour ce faire, un pignon coulant 7 est monté à une extrémité 6 de la tige 4 pour venir en prise avec une roue dentée 25 du système optique 2. Le pignon coulant 7 sous forme tubulaire est bien monté fixement sur l'extrémité intérieure 6 de la tige 4. Cette extrémité intérieure 6 comprend des parties planes extérieures pour recevoir le pignon coulant, qui comprend des parties complémentaires à l'intérieur de sa forme tubulaire l'empêchant de ce fait de tourner sur l'extrémité intérieure 6 de la tige 4. La section transversale de l'extrémité 6 peut par exemple définir un polygone, tel qu'un carré ou un rectangle. Ainsi l'intérieur tubulaire du pignon coulant 7 peut présenter une forme complémentaire à l'extrémité 6. Le pignon coulant 7 peut être fixé par tout moyen sur l'extrémité intérieure 6 de la tige 4, une fois qu'il est positionné sur l'extrémité intérieure 6. Il peut s'agir d'un collage d'une brasure ou d'une vis de fixation à travers le pignon coulant 7 et dans un taraudage de l'extrémité intérieure 6 de la tige 4.

Le système d'action optique 2 comprend tout d'abord un premier photo-réflecteur 21 et un second photo-réflecteur 22 reliés électriquement sur la plaque à circuit imprimé 20. Le premier photo-réflecteur 21 comprend au moins une source de lumière électroluminescente LED dans un premier logement 21a et une portion photo réceptrice dans un second logement 21b du premier photo-réflecteur 21. De même, le second photo-réflecteur 22 comprend une source de lumière électroluminescente LED dans un premier logement 22a et une portion photo réceptrice dans un second logement 22b du second photo-réflecteur 22.

Le système d'action optique 2 comprend encore un disque 23 dans lequel plusieurs ouvertures traversantes 24 sont réalisées. Le disque 23 est monté rotatif autour d'au moins un axe disposé selon une direction perpendiculaire au plan de montre. Ces ouvertures traversantes 24 sont de préférence régulièrement réparties sur un pourtour circulaire à l'intérieur du disque 23. La forme de chaque ouverture traversante 24 peut-être un secteur angulaire partant à proximité du centre du disque et à proximité d'un pourtour extérieur du disque. Il peut être prévu comme indiqué sur la figure 1, six secteurs angulaires de 30° d'angle et espacés chacun d'un espace de 30° d'angle également. Bien entendu, plus ou moins de six secteurs angulaires 24 peuvent être prévus sans limitation, voire également une répartition des secteurs angulaires espacés de manière non uniforme sur un tour à l'intérieur du disque 23.

Le disque 23 est monté fixement sur un premier axe 27 ayant en premier diamètre, et un second axe 26 ayant un second diamètre est monté fixement de manière coaxiale sous le premier axe 27. Le premier diamètre du premier axe 27 est plus grand que le second diamètre du second axe 26. Le disque 23 est monté sur une roue dentée 25 par l'intermédiaire de son second axe 26, qui s'insère dans une ouverture centrale de la roue dentée 25. Le second axe 26 peut être inséré par exemple à force dans l'ouverture centrale de la roue dentée 25 de manière à la fixer solidement au disque 23 et au premier axe 27 et second axe 26 pour ne former qu'une pièce susceptible de tourner autour d'un axe central. La roue dentée 25 est maintenue sur un support inférieur non représenté, mais permettant à l'ensemble du disque 23, du premier axe 27, du second axe 26 et de la roue dentée 25 de pouvoir tourner autour d'un axe central.

Le diamètre du disque 23, qui est défini comme un disque encodeur, est suffisamment grand pour recouvrir au moins en partie les deux photo-réflecteurs 21 et 22. L'espace séparant la surface inférieure du disque 23 et chaque photo-réflecteur 21 et 22 est choisi relativement faible de manière à permettre au disque 23 avec ces ouvertures 24 d'agir comme un obturateur de la lumière générée par les sources de lumière de chaque photo-réflecteur 21, 22. Le disque 23 et les deux photo-réflecteurs 21 et 22 sont disposés sous un bâti ou couvercle 10 de préférence réalisé en matériau plastique, qui est prévu d'être vissé au moyen de vis 11 sur un support 12, qui peut être métallique, lié directement à la platine du mouvement horloger. Un revêtement réfléchissant est réalisé sur une surface intérieure du couvercle 10 en dessus du disque 23 de manière à réfléchir les faisceaux lumineux générés par chaque photo-réflecteur 21 et 22 et passant par les ouvertures 24 du disque 23. Le revêtement réfléchissant peut-être une couche dorée. Le disque 23 peut être réalisé également en matériau plastique avec un revêtement susceptible d'absorber les faisceaux lumineux générés par les photo-réflecteurs 21 et 22. Le disque 23 peut avantageusement être d'un matériau de base ou d'une couleur noire absorbant un maximum de lumière. Grâce à cela, il y a moins de sensibilité aux variations lumineuses des sources de lumière.

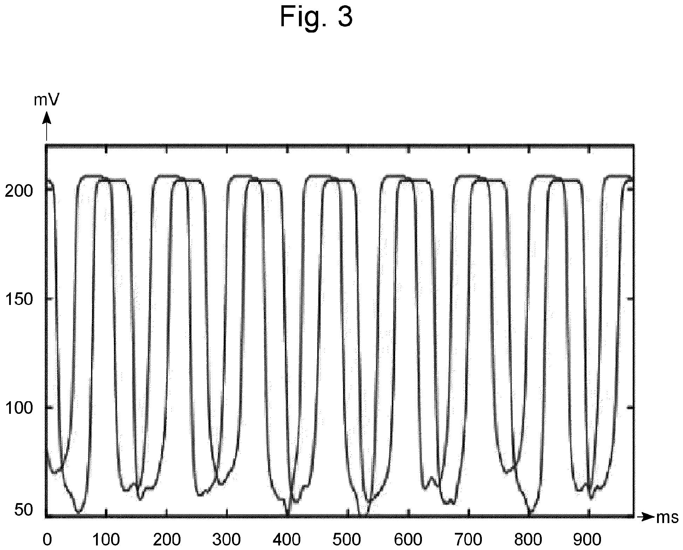

Il est à noter que chaque photo-réflecteur 21 ou 22 est disposé sur la plaque à circuit imprimé 20 de telle manière à obtenir deux signaux en quadrature en sortie des photos récepteurs des deux photo-réflecteurs 21 et 22. Cela signifie deux signaux de forme sensiblement sinusoïdale, si la vitesse de rotation de la tige est plus ou moins constante, ces deux signaux étant espacés dans le temps de 90° l'un de l'autre comme sommairement illustré à la figure 3. L'axe X de la figure 3 indique des ms, et l'axe Y indique des mV. Ceci permet d'identifier le sens de rotation de la tige 4 lorsqu'elle se trouve dans la troisième position T2 avec le pignon coulant 7 entraînant en rotation la roue dentée 25 avec le disque 23.

Il est encore à noter que dans une variante de réalisation de la première forme d'exécution de la figure 1, il peut n'être prévu qu'un seul contacteur 33 sous forme d'une lame métallique en léger décalage en dessous du corps principal de la pièce de sélection 31 et en dessous de la plaque à circuit imprimé 20. Il peut être prévu encore un doigt 33' en élévation à l'extrémité libre du premier contacteur 33, qui est disposé dans un seul trou métallisé. Le contacteur 33 avec son doigt en élévation 33' peut venir contacter d'une part une première borne électrique 36 sur une première portion métalisée du bord circulaire intérieur du trou, ou d'autre part une seconde borne électrique 37 sur une seconde portion métallisée du bord circulaire intérieur du trou. Cependant cette variante de réalisation complexifie la plaque de circuit imprimé et de ce fait augmente les coûts de réalisation d'une telle variante. Il est donc préféré la première forme d'exécution visionnée à la figure 1 expliquée ci-dessus.

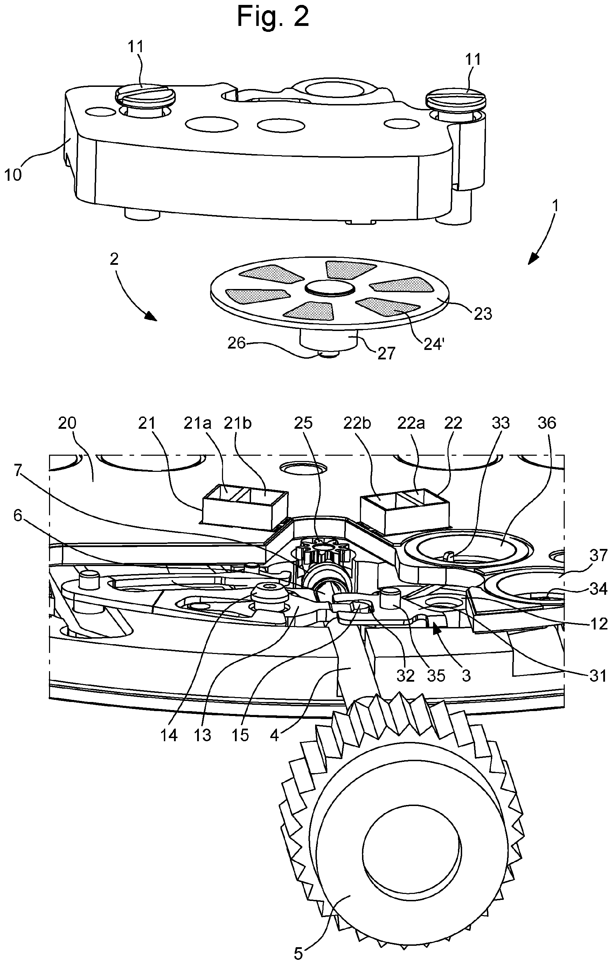

La figure 2 représente une seconde forme d'exécution du dispositif de contrôle de fonctions 1. Cette seconde forme d'exécution du dispositif de contrôle de fonction 1 se différencie de la première forme d'exécution du dispositif 1 décrit ci-dessus, uniquement en ce qui concerne le système d'action optique 2. Le système d'action optique 2 comprend dans cette seconde forme d'exécution un disque 23, dont les ouvertures sont remplacées par des portions réfléchissantes 24'. Dans le cas d'un disque 23 plein, un revêtement de portions réfléchissantes 24' est réalisé sur une surface du disque 23 en regard des photo-réflecteurs 21 et 22. La forme de ces portions réfléchissantes 24' peut être identique aux ouvertures traversantes du disque 23 de la première forme d'exécution décrite ci-dessus. Il est aussi envisageable de remplir complètement les ouvertures traversantes du disque 23 de la première forme d'exécution avec une couche de matériau réfléchissant de la lumière comme plus ou moins représenté à la figure 2. Cependant il est préférable, de n'avoir qu'un revêtement de portions réfléchissantes réalisées sous le disque 23, qui est réalisé intégralement dans un matériau absorbant la lumière, voire de couleur entièrement noire avant le revêtement de portions réfléchissantes.

Dans cette seconde forme d'exécution du dispositif, le disque 23 peut être proche des deux photo-réflecteur 21 et 22, mais tout en leur laissant la possibilité de générer chacun un faisceau de lumière susceptible d'être réfléchi sur les portions réfléchissantes 24' du disque 23, et capter par les photos récepteurs des photo-réflecteurs 21 et 22. Dans ce cas de figure, le couvercle 10, enfermant le disque 23 et les photo-réflecteurs 21 et 22, ne comprend plus de revêtement réfléchissant sur une surface intérieure en regard du disque 23. Cependant, ce couvercle 10 est également fixé sur un support 12 de la platine au moyen de deux vis 11 vissées dans des taraudages correspondants du support 12.

Comme tous les autres composants de cette seconde forme d'exécution du dispositif de contrôle de fonctions 1 sont identiques à ceux décrits en référence à la figure 1, il ne sera de ce fait pas répéter toute cette description.

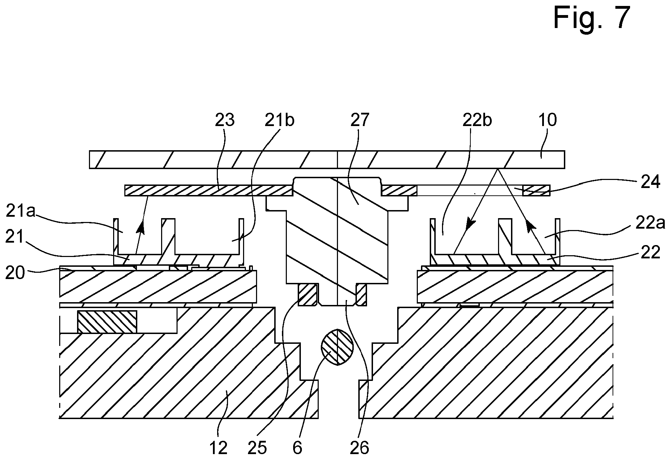

La figure 7 représente une coupe verticale au niveau du système optique de la première forme d'exécution du dispositif de contrôle de fonctions montrant le fonctionnement de détection du sens de rotation de la tige dont l'extrémité 6 est montrée sommairement. On remarque sur cette figure 7, le premier photo-réflecteur 21 et le second photo-réflecteur 22, qui sont montés sur une plaque à circuit imprimé 20 et dans laquelle sont également réalisés les premier et second trous métallisés expliqués plus en détail ci-dessous. Normalement dans une troisième position T2 de la tige, le disque 23 avec ces ouvertures traversantes 24 est mis en rotation par l'entraînement du pignon coulant non représenté à l'extrémité intérieure 6 de la tige en contact avec la roue dentée 25.

Le premier photo-réflecteur 21 génère un faisceau lumineux dans un premier logement 21a en direction du disque 23. Comme ce faisceau lumineux arrive sur une portion absorbant la lumière du disque 23 aucune réflexion de lumière n'est effectuée, et le photo récepteur dans le second logement 21b du premier photo-réflecteur 21 ne capte aucune lumière. Par contre, le second photo-réflecteur 22 génère un faisceau lumineux dans un premier logement 22a en direction du disque 23, et ce faisceau lumineux traverse une ouverture traversante 24 pour être réfléchi sur une surface réfléchissante sous le couvercle. Cette lumière réfléchie est ainsi captée par le photo récepteur dans le second logement 22b du second photo-réflecteur 22. En fonction du placement des deux photo-réflecteurs 21 et 22, les signaux électriques de sortie sont des signaux en quadrature ce qui permet de déterminer le sens de rotation de la tige.

Les figures 4a, 4b et 4c représentent les trois positions T0, T1 et T2 de la tige 4 pour le contrôle de fonctions à effectuer ou à sélectionner de la montre. Les positions T1 et T2 sont des positions stables déterminées, et la position T0 est une position de "clic", qui après avoir pressé sur la couronne liée à la tige 4 revient à la position T1. Ces différentes positions de la tige 4 seront encore expliquées de manière plus spécifique à la suite de la description des différentes figures 4a, 4b et 4c.

A la figure 4a, la position T0 de la tige 4 est représentée. La tige 4 est tirée vers l'extérieur de la boîte de montre par l'intermédiaire de la couronne non représentée. L'élément guide 13, qui est défini comme la tirette, est tourné en direction de l'extérieur de la boîte de montre par son extrémité arrondie 15, qui se trouve dans la rainure circulaire 8 de la portion intermédiaire de la tige 4. L'extrémité arrondie 15 de l'élément guide 13, qui se trouve également dans l'ouverture 32 de l'extrémité en forme de U de la pièce de sélection 31, entraîne en rotation la pièce de sélection 31, qui tourne autour de l'autre axe 35 dans un sens antihoraire en regard de la figure 4a. Une fois que la tige 4 se trouve dans cette position T0, elle reste dans cette position provisoirement.

La pièce de sélection 31 comprend un premier contacteur 33, qui est une lame métallique, qui est en léger décalage en dessous du corps la pièce de sélection. Cette lame métallique s'étend depuis une portion centrale ou un corps de la pièce de sélection 31 en direction de l'intérieur du premier trou métallisé en bordure intérieure 36. Dans le premier trou métallisé en bordure intérieure 36, un doigt 33' en élévation à l'extrémité libre du premier contacteur 33 vient en contact directement de la bordure intérieure métallisée 36, qui définit la première borne électrique. Un interrupteur ou micro-rupteur non représenté est relié à la première borne électrique de manière à la mettre à la masse tout comme le potentiel de la platine, voire de la mettre à une tension différente telle que la tension d'alimentation fournie par la pile, mais qui n'est pas avantageux dans ce cas de figure. Un circuit électronique de traitement du dispositif de contrôle de fonctions n'est pas représenté, mais il prend en compte le contact du premier contacteur 33 à la première borne électrique 36. De cette manière, une action sur la couronne de la première position T0 instruit le circuit électronique de traitement pour effectuer une fonction particulière notamment en liaison à la base de temps de la montre.

La pièce de sélection 31 comprend encore un second contacteur 34, qui est une lame métallique, qui est en léger décalage en dessous du corps la pièce de sélection 31. Cette lame métallique s'étend depuis une portion centrale de la pièce de sélection 31 d'un côté opposé au premier contacteur 33 en direction de l'intérieur du second trou métallisé en bordure intérieure 37. Dans ce second trou métallisé en bordure intérieure 37, un doigt 34' en élévation à l'extrémité libre du second contacteur 34 ne vient pas en contact du bord intérieur métallisé 37, et reste plus ou moins dans une position centrale de ce second trou. La lame du premier contacteur 33 et la lame du second contacteur peuvent être parallèles à la plaque à circuit imprimé et passant en dessous de la plaque à circuit imprimé, qui peut aussi être de nature flexible.

A la figure 4b, la seconde position T1 de la tige 4 est représentée. La tige 4 est dans une position stable que l'on peut qualifier comme une position de repos. L'élément guide 13 avec son extrémité arrondie 15 se trouve centré dans la rainure circulaire 8 de la portion centrale de la tige 4. Dans ce cas de figure, le premier contacteur 33 et le second contacteur 34 ne viennent pas en contact du premier trou en bordure intérieure métallisée 36 et du second trou en bordure intérieure métallisée 37. Tous les autres éléments décrits en référence à la figure précédente 4a sont identiques et ne seront donc pas répétés. Le circuit électronique de traitement du dispositif de contrôle de fonctions prend également en compte cette seconde position T1 en fonction du passage d'une précédente position à cette seconde position T1 comme expliqué plus en détail ci-dessous.

A la figure 4c, la troisième position T2 de la tige 4 est représentée. La tige 4 est dans une troisième position stable T2. La tige 4 est poussée vers l'intérieur de la boîte de montre par l'intermédiaire de la couronne non représentée. L'élément guide 13 est tourné en direction de l'intérieur de la boîte de montre par son extrémité arrondie 15, qui se trouve dans la rainure circulaire 8 de la portion intermédiaire de la tige 4. L'extrémité arrondie 15 de l'élément guide 13, qui se trouve également dans l'ouverture 32 de l'extrémité en forme de U de la pièce de sélection 31, entraîne en rotation la pièce de sélection 31, qui tourne autour de l'autre axe 35 dans un sens horaire cette fois-ci en regard de la figure 4c. Une fois que la tige 4 se trouve dans cette troisième position T2, elle reste dans cette position stable.

Dans cette troisième position T2, le pignon coulant 7, qui est monté fixement sur l'extrémité intérieure 6 de la tige 4, vient en prise avec la roue dentée 25 du système d'action optique. Ainsi en tournant la couronne liée à la tige 4, le disque, à ouvertures traversantes ou à portions réfléchissante du système d'action optique décrit en référence aux figures 1 et 2 ci-dessus, tourne également. Les deux photo-réflecteurs du système optique fournissent des signaux lumineux qui sont en partie réfléchis et captés par les photos récepteurs des photo-réflecteurs. Cela a pour effet de fournir deux signaux électriques en sortie de photo-réflecteurs permettant de déterminer le sens de rotation de la tige 4. Le circuit de traitement du dispositif de contrôle de fonctions prend en compte le sens de rotation de la tige notamment pour permettre une correction de l'heure, des minutes ou des secondes, voire de la date également.

A l'inverse de ce qui a été présenté à la figure 4a pour la première position T0, ici c'est le second contacteur 34 par l'intermédiaire de son doigt 34', qui vient en contact dans le second trou métallisé de la bordure intérieure 37, qui constitue la seconde borne électrique. Un interrupteur ou micro-rupteur non représenté est relié à la seconde borne électrique de manière à la mettre à la masse tout comme le potentiel de la platine, voire de la mettre à une tension différente telle que la tension d'alimentation fournie par la pile, mais qui n'est pas avantageux dans ce cas de figure. Dans le premier trou métallisé en bordure intérieure 36, le doigt 33' du premier contacteur 33 ne vient pas en contact du bord intérieur métallisé 36, et reste plus ou moins dans une position centrale de ce premier trou.

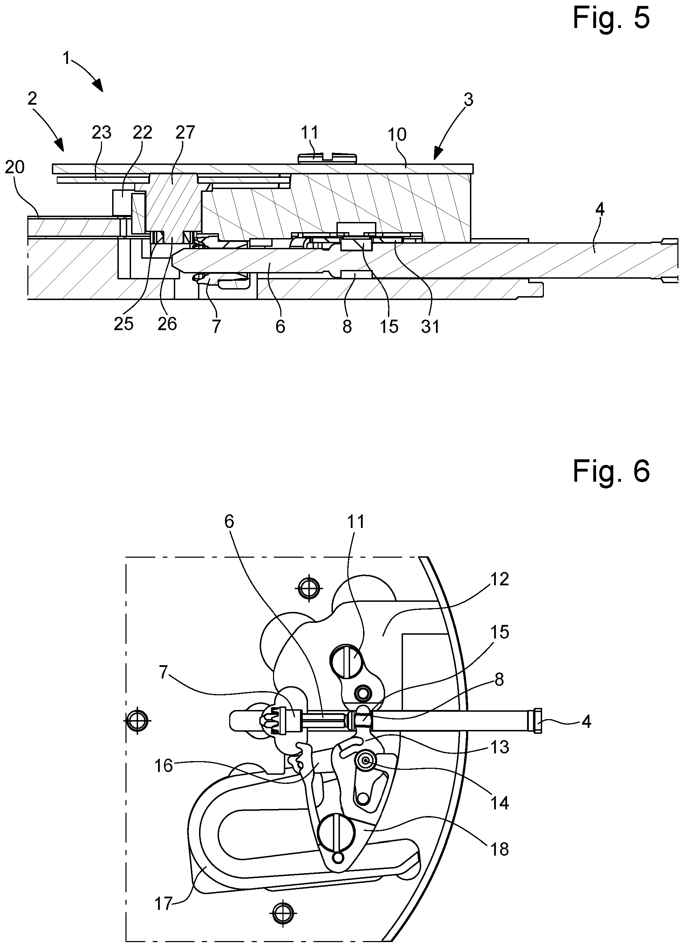

La figure 5 représente uniquement une coupe longitudinale le long de l'axe de la tige 4 représentant le dispositif 1 de contrôle de fonctions selon la première forme d'exécution dans la troisième position T2 de la tige 4 actionnant le système optique 2. De manière à ne pas répéter tous les éléments déjà décrits en référence aux figures 1 et 2, on remarque principalement l'extrémité arrondie 15 de l'élément guide, qui se trouve dans la rainure circulaire 8 de la tige 4 et qui est entraînée vers l'intérieur de la boîte de montre lorsque la tige 4 est poussée vers l'intérieur. La pièce de sélection 31 est également tournée de manière que le second contacteur non représenté vienne contacter le second trou métallisé comme expliqué précédemment. Le pignon coulant 7 sur l'extrémité intérieure 6 de la tige 4 est en prise avec la roue dentée 25 du système optique 2 de manière à permettre une rotation du disque 23 et la réflexion ou non de signaux lumineux générés par chaque photo-réflecteur, dont uniquement le second photo-réflecteur 22 est représenté. Le couvercle 10 enfermant le système optique est bien vissé sur le support lié à directement la platine du mouvement de montre au moyen de deux vis 11.

La figure 6 représente une vue de dessus des éléments pour l'indexation mécanique de la tige 4 du dispositif de contrôle de fonctions. L'élément guide 13, qui est défini comme une tirette, comprend encore une portion latérale 16, qui peut venir en prise avec un sautoir tirette 18 en fonction de la position déterminée de la tige 4. Il est également représenté en plus un ressort tirette 17, qui agit uniquement lorsque la tige 4 passe de la seconde position T1 à la première position T0 et encore à la seconde position T1. Dans cette seconde position T1, le ressort tirette 17 n'est pas en contact avec la tirette 13 par l'intermédiaire de sa portion latérale 16. Il est positionné et mis en précontrainte par la platine.

Le sautoir tirette 18 indexe l'élément guide 13, qui est défini comme la tirette, par l'intermédiaire de sa portion latérale 16 dans une seconde position stable T1 et une troisième position stable T2. Dans la première position T0, il n'est réalisé que la sensation de clic. Ainsi, le ressort tirette 17 assure que la tirette 13 revienne dans la seconde position T1 suite à un clic.

Il est à noter que pour plus de détails sur les positions stables et à clic on peut se référer à la description technique du module ETA E63.111 sans décrire plus en détail dans cette description tout le fonctionnement.

À titre d'exemple non limitatif du dispositif de contrôle de fonctions selon l'invention intégré dans le mouvement d'une montre, on peut expliquer ci-dessous les différentes fonctionnalités.

Pour le réglage de l'heure et de la date, la couronne peut être tirée vers la première position T0. Selon le mouvement à disposition du calibre utilisé, l'aiguille des heures peut faire un battement. Lorsqu'on tourne la couronne, il peut y avoir un saut de l'heure par incrément d'une heure. Une validation du réglage peut être effectuée en poussant la couronne vers la seconde position stable T1.

Pour le réglage de la seconde ou de la minute, la couronne peut être poussée vers la troisième position T2, où le pignon coulant vient en prise de la roue dentée du système optique. Dans cette position l'aiguille des secondes peut faire un battement. Après cela, la couronne liée à la tige est tirée vers la première position T0, ce qui a pour conséquence que l'aiguille des secondes se place à 12 heures. La couronne est ensuite tournée, ce qui a pour conséquence un saut de la minute par incrément d'une minute. Ensuite une validation du réglage est effectuée en poussant la couronne vers la seconde position de repos T1.

Il est encore à noter, qu'il peut être envisageable, pour le dispositif de contrôle de fonctions, d'avoir trois positions de la tige indiquées T1, T2 et T3, qui sont des positions stables au lieu d'avoir les positions T0 (clic), T1 (stable) et T2 (stable). De plus, il peut être prévu également d'avoir la tige du dispositif de contrôle de fonctions, qui est démontable à l'instar d'un calibre classique.

Bien entendu, d'autres possibilités de fonctionnement avec ses trois positions du dispositif de contrôle de fonctions peuvent être envisagées par l'homme du métier sans sortir du cadre de l'invention définie par les revendications.

## Revendications

1. Dispositif (1) de contrôle de fonctions d'une montre, le dispositif (1) de contrôle de fonctions comprenant principalement une couronne (5) liée à une tige (4) pour l'actionnement de moyens de sélection de fonctions dans une boîte de montre, la couronne (5) se trouvant sur une partie extérieure de la boîte de montre,
le dispositif (1) de contrôle de fonctions comprenant, de manière intégrée à un mouvement horloger de la montre, un système d'action optique (2) actionné dans une position de la tige (4) parmi trois positions (T0, T1, T2) définies possibles de la tige (4) de manière à déterminer le sens de rotation de la tige (4), et un agencement mécanique électronique (3) pour effectuer un contrôle de fonctions dans toutes les trois positions de la tige (4), ledit agencement mécanique électronique (3) comprenant un élément guide (13) monté rotatif autour d'un axe de rotation (14) sur un support (12) lié à une platine du mouvement horloger, l'élément guide (13) sous forme générale plane, ayant une extrémité arrondie (15) disposée dans une rainure (8) annulaire circulaire d'une portion intermédiaire de la tige (4) pour être entraînée en rotation lors du déplacement de la tige (4) dans l'une ou l'autre des trois positions définies, et une pièce de sélection (31) montée rotative autour d'un autre axe de rotation (35) sur le support (12) et au-dessus de la rainure annulaire de la tige et destinée à être entraînée en rotation par l'extrémité arrondie (15) de l'élément guide (13) d'épaisseur suffisante pour se loger également dans une ouverture (32) en forme de U d'une extrémité de la pièce de sélection (31), la pièce de sélection (31) comprenant au moins un contacteur (33) conducteur d'électricité disposé sur un côté opposé à l'extrémité en forme de U de manière à venir contacter une première borne électrique (36) sur une plaque à circuit imprimé (20) dans une première position (T0) de la tige (4), sans contact électrique dans une seconde position (T1) de la tige (4), et de manière à venir contacter une seconde borne électrique (37) sur la plaque à circuit imprimé (20) dans une troisième position (T2) de la tige (4).

2. Dispositif (1) selon la revendication 1, **caractérisé en ce que** la pièce de sélection (31) est une pièce métallique conductrice d'électricité, **en ce qu'**elle comprend un premier contacteur (33) sous forme d'une lame métallique, dont une extrémité est reliée à un corps de la pièce de sélection métallique (31) à proximité de l'autre axe de rotation (35), et dont une autre extrémité libre de la lame métallique est susceptible de venir contacter une première borne électrique (36) sur une première portion métallisée d'un bord circulaire intérieur d'un trou réalisé à travers la plaque à circuit imprimé (20) dans une première position (T0) de la tige (4), ou de venir contacter une seconde borne électrique (37) sur une seconde portion métallisée du bord circulaire intérieur du trou dans une troisième position (T2) de la tige (4), ou d'être sans contact de la première borne électrique (36) ou de la seconde borne électrique (37) dans une seconde position (T1) de la tige (4).

3. Dispositif (1) selon la revendication 2, **caractérisé en ce que** corps de la pièce de sélection (31) est sensiblement parallèle à la plaque à circuit imprimé (20), **en ce que** la lame métallique du premier contacteur (33) est disposée en léger décalage en dessous du corps de la pièce de sélection (31) et de la plaque à circuit imprimé (20), **en ce que** l'extrémité libre du premier contacteur (33) comprend un doigt (33') en élévation pour venir contacter soit la première borne électrique (36), soit la seconde borne électrique (37) soit être sans contact avec les deux bornes électriques (36, 37) en fonction de la position de la tige (4), et **en ce que** le diamètre du trou qui comprend les deux bornes électriques est défini en fonction des trois positions de la tige (4) et du déplacement de l'extrémité libre du premier contacteur (33) dans chacune des trois positions.

4. Dispositif (1) selon la revendication 1, **caractérisé en ce que** la pièce de sélection (31) est une pièce métallique conductrice d'électricité, **en ce qu'**elle comprend un premier contacteur (33) et un second contacteur (34), qui sont chacun sous forme d'une lame métallique, dont une extrémité du premier contacteur (33) est reliée à un corps de la pièce de sélection métallique (31) à proximité de l'autre axe de rotation (35), alors qu'une extrémité du second contacteur (34) est reliée au corps de la pièce de sélection métallique (31) d'un côté opposé à l'autre axe de rotation (35), **en ce qu'**une autre extrémité libre de la lame métallique du premier contacteur (33) est susceptible de venir contacter une première borne électrique (36) sur un bord intérieur métallisé d'un premier trou réalisé à travers la plaque à circuit imprimé (20) dans une première position (T0) de la tige (4), alors que le second contacteur (34) se trouve sans contact électrique dans un second trou adjacent réalisé à travers la plaque à circuit imprimé (20), le second trou comprenant une seconde borne électrique (37) sur un bord intérieur métallisé de ce second trou, **en ce qu'**une autre extrémité libre de la lame métallique du second contacteur (34) est susceptible de venir contacter la seconde borne électrique (37) sur le bord intérieur métallisé de ce second trou dans une troisième position (T2) de la tige (4), alors que le premier contacteur (33) se trouve sans contact électrique dans le premier trou, et **en ce que** le premier contacteur (33) et le second contacteur (34) n'ont aucun contact électrique avec la première borne électrique (36) et avec la seconde borne électrique (37) dans une seconde position (T2) de la tige (4).

5. Dispositif (1) selon la revendication 4, **caractérisé en ce que** le corps de la pièce de sélection (31) est sensiblement parallèle à la plaque à circuit imprimé (20), **en ce que** la lame métallique du premier contacteur (33) et la lame métallique du second contacteur (34) sont disposées en léger décalage en dessous du corps de la pièce de sélection (31) et de la plaque à circuit imprimé (20), **en ce que** l'extrémité libre du premier contacteur (33) comprend un doigt (33') en élévation pour venir contacter la première borne électrique (36) du premier trou dans la première position (T0) de la tige (4), **en ce que** l'extrémité libre du second contacteur (34) comprend un doigt (34') en élévation pour venir contacter la seconde borne électrique (37) du second trou dans la troisième position (T2) de la tige (4), et **en ce que** le diamètre du premier trou et le diamètre du second trou sont définis en fonction des trois positions de la tige (4) et du déplacement de l'extrémité libre du premier contacteur (33) et de l'extrémité libre du second contacteur (34) dans chacune des trois positions.

6. Dispositif (1) selon la revendication 1, **caractérisé en ce que** chaque contact électrique du premier contacteur (33) ou du premier contacteur (33) avec un second contacteur (34) de la pièce de sélection (31) contre la première borne électrique (36) dans la première position (T0) de la tige (4) ou contre la seconde borne électrique (37) dans la troisième position (T2) de la tige (4) contrôle un micro-rupteur par borne électrique en liaison directe avec un circuit de traitement de données de la montre pour le réglage de différents paramètres notamment de l'heure, de la date des minutes et des secondes dans l'une ou l'autre des positions de la tige (4).

7. Dispositif (1) selon la revendication 1, **caractérisé en ce que** le système d'action optique (2) est activé dans la troisième position (T2) de la tige (4) lors de la rotation de la tige (4), **en ce qu'**il comprend un premier photo-réflecteur (21) et un second photo-réflecteur (22) électriquement reliés sur la plaque à circuit imprimé (20), **en ce que** le premier photo-réflecteur (21) comprend au moins une source de lumière électroluminescente et une portion photo réceptrice, **en ce que** le second photo-réflecteur (22) comprend une source de lumière électroluminescente et une portion photo réceptrice, **en ce que** le système d'action optique (2) comprend encore un disque (23) monté rotatif selon au moins un axe vertical perpendiculaire au plan de montre, et au-dessus des photo-réflecteurs (21, 22), **en ce que** le disque (23) comprend des ouvertures traversantes (24) susceptibles de laisser passer de la lumière à travers l'une ou l'autre des ouvertures traversantes (24) provenant du premier photo-réflecteur (21) et/ou du second photo-réflecteur (22) lorsqu'il tourne au-dessus des photo-réflecteurs (21, 22) de manière que la lumière soit réfléchie sur une surface réfléchissante d'un couvercle (10) au-dessus des ouvertures traversantes (24) du disque (23), et **en ce que** la lumière réfléchie est captée par une portion photo réceptrice du premier photo-réflecteur (21) et/ou du second photo-réflecteur (22), qui sont disposés sur la plaque à circuit imprimé (20) de telle manière à fournir en sortie deux signaux en quadrature déterminant le sens de rotation de la tige (4).

8. Dispositif (1) selon la revendication 1, **caractérisé en ce que** le système d'action optique (2) est activé dans la troisième position (T2) de la tige (4) lors de la rotation de la tige (4), **en ce qu'**il comprend un premier photo-réflecteur (21) et un second photo-réflecteur (22) électriquement reliés sur la plaque à circuit imprimé (20), **en ce que** le premier photo-réflecteur (21) comprend au moins une source de lumière électroluminescente et une portion photo réceptrice, **en ce que** le second photo-réflecteur (22) comprend une source de lumière électroluminescente et une portion photo réceptrice, **en ce que** le système d'action optique (2) comprend encore un disque (23) monté rotatif selon au moins un axe vertical perpendiculaire au plan de montre, et au-dessus des photo-réflecteurs (21, 22), **en ce que** le disque (23) comprend un revêtement de portions réfléchissantes (24') réalisé sur une surface du disque (23) en regard des photo-réflecteurs (21, 22), l'une ou l'autre des portions réfléchissantes (24') étant susceptibles de réfléchir de la lumière provenant de la source de lumière électroluminescente du premier photo-réflecteur (21) et/ou du second photo-réflecteur (22) lorsque le disque (23) tourne au-dessus des photo-réflecteurs (21, 22), et **en ce que** la lumière réfléchie est captée par une portion photo réceptrice du premier photo-réflecteur (21) et/ou du second photo-réflecteur (22), qui sont disposés sur la plaque à circuit imprimé (20) de telle manière à fournir en sortie deux signaux en quadrature déterminant le sens de rotation de la tige (4).

9. Dispositif (1) selon l'une des revendications 7 et 8, **caractérisé en ce que** les ouvertures traversantes (24) ou les portions réfléchissantes (24') sont régulièrement réparties sur un pourtour circulaire à l'intérieur du disque (23).

10. Dispositif (1) selon la revendication 9, **caractérisé en ce qu'**il est prévu six secteurs angulaires de 30° d'angle d'ouvertures traversantes (24) ou de portions réfléchissantes (24'), et espacés chacun d'un espace de 30° d'angle également.

11. Dispositif (1) selon l'une des revendications 7 et 8, **caractérisé en ce que** la source de lumière électroluminescente du premier photo-réflecteur (21) est disposée dans un premier logement (21a) du premier photo-réflecteur (21), **en ce que** la portion photo réceptrice du premier photo-réflecteur (21) est disposée dans un second logement (21b) du premier photo-réflecteur (21), **en ce que** la source de lumière électroluminescente du second photo-réflecteur (22) est disposée dans un premier logement (22a) du second photo-réflecteur (22), et **en ce que** la portion photo réceptrice du second photo-réflecteur (22) est disposée dans un second logement (22b) du second photo-réflecteur (22).

12. Dispositif (1) selon l'une des revendications 7 et 8, **caractérisé en ce que** la tige (4) comprend un pignon coulant (7) sous forme tubulaire et monté à une extrémité intérieure (6) de la tige (4) pour venir en prise avec une roue dentée (25) liée à l'axe de rotation (26) du disque (23) dans la troisième position (T2) de la tige (4) de manière à faire tourner le disque (23) lors de la rotation de la tige (4).

## Patentansprüche

1. Kontrollvorrichtung (1) der Funktionen einer Armbanduhr, wobei die Kontrollvorrichtung (1) der Funktionen hauptsächlich eine Krone (5) umfasst, die mit einer Welle (4) für die Betätigung von Auswahlmitteln von Funktionen in einem Armbanduhrgehäuse verbunden ist, wobei sich die Krone (5) in einem Bereich außerhalb des Armbanduhrgehäuses befindet,
wobei die Kontrollvorrichtung (1) der Funktionen, integriert in ein Uhrwerk der Armbanduhr, ein optisches Aktionssystem (2) umfasst, das in eine Position der Welle (4) von drei festgelegten möglichen Positionen (T0, T1, T2) der Welle (4) betätigt wird, so dass die Rotationsrichtung der Welle (4) festgelegt wird, und eine elektronische mechanische Anordnung (3) zur Durchführung einer Kontrolle der Funktionen in allen drei Positionen der Welle (4), wobei die elektronische mechanische Anordnung (3) ein Führungselement (13) umfasst, das um eine Rotationsachse (14) auf einem Halter (12), der mit einer Werkplatte des Uhrwerks verbunden ist, rotatorisch angebracht ist, wobei das allgemein ebene Führungselement (13) ein abgerundetes Ende (15) hat, das in einer kreisringförmigen Nut (8) eines Verbindungsabschnitts der Welle (4) angeordnet ist, um bei der Verlagerung der Welle (4) in die eine oder die andere der drei festgelegen Positionen rotatorisch angetrieben zu werden, und ein Auswahlteil (31), das um eine andere Rotationsachse (35) auf dem Halter (12) und oberhalb der ringförmigen Nut der Welle rotatorisch angebracht ist und bestimmt ist, von dem abgerundeten Ende (15) des Führungselements (13), dessen Dicke ausreichend ist, um ebenfalls in eine U-förmige Öffnung (32) eines Endes des Auswahlteils (31) einzugreifen, rotatorisch angetrieben zu werden, wobei das Auswahlteil (31) mindestens einen stromleitenden Kontaktgeber (33) umfasst, der auf einer Seite angeordnet ist, die dem U-förmigen Ende derart gegenüberliegt, dass er einen ersten elektrischen Kontakt (36) auf einer gedruckten Schaltung (20) in einer ersten Position (T0) der Welle (4) kontaktiert, ohne elektrischen Kontakt in einer zweiten Position (T1) der Welle (4), und derart, dass er einen zweiten elektrischen Kontakt (37) auf der gedruckten Schaltung (20) in einer dritten Position (T2) der Welle (4) kontaktiert.

2. Vorrichtung (1) nach Anspruch 1, **dadurch gekennzeichnet, dass** das Auswahlteil (31) ein stromleitendes Metallteil ist, dass es einen ersten Kontaktgeber (33) in Form einer metallischen Lamelle umfasst, wobei ein Ende mit einem Körper des metallischen Auswahlteils (31) in der Nähe der anderen Rotationsachse (35) verbunden ist und wobei ein anderes freies Ende der metallischen Lamelle imstande ist, mit einem ersten elektrischen Kontakt (36) auf einem ersten metallisierten Abschnitt eines inneren kreisförmigen Randes eines Lochs, das durch die gedruckte Schaltung (20) ausgeführt ist, in einer ersten Position (T0) der Welle (4) in Kontakt zu gelangen, oder mit einem zweiten elektrischen Kontakt (37) auf einem zweiten metallisierten Abschnitt des inneren kreisförmigen Randes des Lochs in einer dritten Position (T2) der Welle (4) in Kontakt zu gelangen, oder ohne Kontakt mit dem ersten elektrischen Kontakt (36) oder dem zweiten elektrischen Kontakt (37) in einer zweiten Position (T1) der Welle (4) zu sein.

3. Vorrichtung (1) nach Anspruch 2, **dadurch gekennzeichnet, dass** der Körper des Auswahlteils (31) etwa parallel zu der gedruckten Schaltung (20) ist, dass die metallische Lamelle des ersten Kontaktgebers (33) leicht versetzt unterhalb des Körpers des Auswahlteils (31) und der gedruckten Schaltung (20) angeordnet ist, dass das freie Ende des ersten Kontaktgebers (33) einen angehobenen Finger (33') umfasst, um entweder den ersten elektrischen Kontakt (36) oder den zweiten elektrischen Kontakt (37) zu kontaktieren oder um ohne Kontakt mit den zwei elektrischen Kontakten (36, 37) in Abhängigkeit von der Position der Welle (4) zu sein, und dass der Durchmesser des Lochs, das die beiden elektrischen Kontakte umfasst, in Abhängigkeit von den drei Positionen der Welle (4) und der Verlagerung des freien Endes des ersten Kontaktgebers (33) in jede der drei Positionen festgelegt ist.

4. Vorrichtung (1) nach Anspruch 1, **dadurch gekennzeichnet, dass** das Auswahlteil (31) ein stromleitendes Metallteil ist, dass es einen ersten Kontaktgeber (33) und einen zweiten Kontaktgeber (34) umfasst, die jeweils in Form einer metallischen Lamelle vorliegen, wobei ein Ende des ersten Kontaktgebers (33) mit einem Körper des metallischen Auswahlteils (31) in der Nähe der anderen Rotationsachse (35) verbunden ist, wohingegen ein Ende des zweiten Kontaktgebers (34) mit dem Körper des metallischen Auswahlteils (31) auf einer entgegengesetzten Seite zur anderen Rotationsachse (35) verbunden ist, dass ein anderes freies Ende der metallischen Lamelle des ersten Kontaktgebers (33) imstande ist, mit einem ersten elektrischen Kontakt (36) auf einem metallisierten Innenrand eines ersten Lochs, das durch die gedruckte Schaltung (20) ausgeführt ist, in einer ersten Position (T0) der Welle (4) in Kontakt zu gelangen, wohingegen sich der zweite Kontaktgeber (34) ohne elektrischen Kontakt in einem zweiten benachbarten Loch befindet, das durch die gedruckte Schaltung (20) ausgeführt wurde, wobei das zweite Loch einen zweiten elektrische Kontakt (37) auf einem metallisierten Innenrand dieses zweiten Lochs umfasst, dass ein anderes freies Ende der metallischen Lamelle des zweiten Kontaktgebers (34) imstande ist, mit dem zweiten elektrischen Kontakt (37) auf dem metallisierten Innenrand dieses zweitens Lochs in einer dritten Position (T2) der Welle (4) in Kontakt zu gelangen, wohingegen sich der erste Kontaktgeber (33) ohne elektrischen Kontakt im ersten Loch befindet, und dass der erste Kontaktgeber (33) und der zweite Kontaktgeber (34) keinen elektrischen Kontakt mit dem ersten elektrischen Kontakt (36) und mit dem zweiten elektrischen Kontakt (37) in einer zweiten Position (T2) der Welle (4) haben.

5. Vorrichtung (1) nach Anspruch 4, **dadurch gekennzeichnet, dass** der Körper des Auswahlteils (31) etwa parallel zu der gedruckten Schaltung (20) ist, dass die metallische Lamelle des ersten Kontaktgebers (33) und die metallische Lamelle des zweiten Kontaktgebers (34) leicht versetzt unterhalb des Körpers des Auswahlteils (31) und der gedruckten Schaltung (20) angeordnet sind, dass das freie Ende des ersten Kontaktgebers (33) einen angehobenen Finger (33') umfasst, um mit dem ersten elektrischen Kontakt (36) des ersten Lochs in der ersten Position (T0) der Welle (4) in Kontakt zu gelangen, dass das freie Ende des zweiten Kontaktgebers (34) einen angehobenen Finger (34') umfasst, um mit dem zweiten elektrischen Kontakt (37) des zweiten Lochs in der dritten Position (T2) der Welle (4) in Kontakt zu gelangen, und dass der Durchmesser des ersten Lochs und der Durchmesser des zweiten Lochs in Abhängigkeit von den drei Positionen der Welle (4) und der Verlagerung des freien Endes des ersten Kontaktgebers (33) und des freien Endes des zweiten Kontaktgeber (34) in jede der drei Positionen festgelegt sind.

6. Vorrichtung (1) nach Anspruch 1, **dadurch gekennzeichnet, dass** jeder elektrische Kontakt des ersten Kontaktgebers (33) oder des ersten Kontaktgebers (33) mit einem zweiten Kontaktgeber (34) des Auswahlteils (31) am ersten elektrischen Kontakt (36) in der ersten Position (T0) der Welle (4) oder am zweiten elektrischen Kontakt (37) in der dritten Position (T2) der Welle (4) einen Mikroschalter je elektrischen Kontakt in direkter Verbindung mit einem Datenverarbeitungs-Schaltkreis der Armbanduhr für die Einstellung verschiedener Parameter, insbesondere der Stunde, des Datums, der Minuten und der Sekunden in der einen oder der anderen der Positionen der Welle (4) kontrolliert.

7. Vorrichtung (1) nach Anspruch 1, **dadurch gekennzeichnet, dass** das optische Aktionssystem (2) in der dritten Position (T2) der Welle (4) bei der Rotation der Welle (4) aktiviert wird, dass es einen ersten Photoreflektor (21) und einen zweiten Photoreflektor (22) umfasst, die auf der gedruckten Schaltung (20) elektrisch verbunden sind, dass der erste Photoreflektor (21) mindestens eine elektrolumineszierende Lichtquelle und einen Photorezeptionsabschnitt umfasst, dass der zweite Photoreflektor (22) eine elektrolumineszierende Lichtquelle und einen Photorezeptionsabschnitt umfasst, dass das optische Aktionssystem (2) weiterhin eine Scheibe (23) umfasst, die gemäß mindestens einer vertikalen Achse senkrecht zur Ebene der Armbanduhr und oberhalb der Photoreflektoren (21, 22) rotatorisch angebracht ist, dass die Scheibe (23) Durchgangsöffnungen (24) umfasst, die imstande sind, Licht durch die eine oder die andere der Durchgangsöffnungen (24) hindurchzulassen, das vom ersten Photoreflektor (21) und/oder vom zweiten Photoreflektor (22) kommt, wenn sie oberhalb der Photoreflektoren (21, 22) dreht, so dass das Licht auf einer reflektierenden Oberfläche eines Deckels (10) oberhalb der Durchgangsöffnungen (24) der Scheibe (23) reflektiert wird, und dass das reflektierte Licht von einem Photorezeptionsabschnitt des ersten Photoreflektors (21) und/oder des zweiten Photoreflektors (22) aufgefangen wird, die auf der gedruckten Schaltung (20) derart angeordnet sind, dass am Ausgang zwei Quadratursignale bereitgestellt werden, die die Rotationsrichtung der Welle (4) bestimmen.

8. Vorrichtung (1) nach Anspruch 1, **dadurch gekennzeichnet, dass** das optische Aktionssystem (2) in der dritten Position (T2) der Welle (4) bei der Rotation der Welle (4) aktiviert wird, dass es einen ersten Photoreflektor (21) und einen zweiten Photoreflektor (22) umfasst, die auf der gedruckten Schaltung (20) elektrisch verbunden sind, dass der erste Photoreflektor (21) mindestens eine elektrolumineszierende Lichtquelle und einen Photorezeptionsabschnitt umfasst, dass der zweite Photoreflektor (22) eine elektrolumineszierende Lichtquelle und einen Photorezeptionsabschnitt umfasst, dass das optische Aktionssystem (2) weiterhin eine Scheibe (23) umfasst, die gemäß mindestens einer vertikalen Achse senkreich zur Ebene der Armbanduhr und oberhalb der Photoreflektoren (21, 22) rotatorisch angebracht ist, dass die Scheibe (23) eine Beschichtung reflektierender Abschnitte (24') umfasst, die auf einer Oberfläche der Scheibe (23) den Photoreflektoren (21, 22) zugewandt ausgeführt ist, wobei der eine oder der andere der reflektierenden Abschnitte (24') imstande ist, Licht zu reflektieren, das von der elektrolumineszierende Lichtquelle des ersten Photoreflektors (21) und/oder des zweiten Photoreflektors (22) kommt, wenn die Scheibe (23) oberhalb der Photoreflektoren (21, 22) dreht, und dass das reflektierte Licht von einem Photorezeptionsabschnitt des ersten Photoreflektors (21) und/oder des zweiten Photoreflektors (22) aufgefangen wird, die auf der gedruckten Schaltung (20) derart angeordnet sind, dass am Ausgang zwei Quadratursignale bereitgestellt werden, die die Rotationsrichtung der Welle (4) bestimmen.

9. Vorrichtung (1) nach einem der Ansprüche 7 und 8, **dadurch gekennzeichnet, dass** die Durchgangsöffnung (24) oder die reflektierenden Abschnitte (24') auf einem kreisförmigen Umfang im Inneren der Scheibe (23) gleichmäßig verteilt sind.

10. Vorrichtung (1) nach Anspruch 9, **dadurch gekennzeichnet, dass** sechs 30°-Durchgangsöffnungswinkel-Winkelsektoren (24) oder reflektierende Abschnittswinkel (24') vorgesehen sind, die jeweils in einem Winkel von ebenfalls 30° voneinander beabstandet sind.

11. Vorrichtung (1) nach einem der Ansprüche 7 und 8, **dadurch gekennzeichnet, dass** die elektrolumineszierende Lichtquelle des ersten Photoreflektors (21) in einer ersten Aufnahme (21a) des ersten Photoreflektors (21) angeordnet ist, dass der Photorezeptionsabschnitt des ersten Photoreflektors (21) in einer zweiten Aufnahme (21b) des ersten Photoreflektors (21) angeordnet ist, dass die elektrolumineszierende Lichtquelle des zweiten Photoreflektors (22) in einer ersten Aufnahme (22a) des zweiten Photoreflektors (22) angeordnet ist und dass der Photorezeptionsabschnitt des zweiten Photoreflektors (22) in einer zweiten Aufnahme (22b) des zweiten Photoreflektors (22) angeordnet ist.

12. Vorrichtung (1) nach einem der Ansprüche 7 und 8, **dadurch gekennzeichnet, dass** die Welle (4) ein fließendes Ritzel (7) umfasst, das rohrförmig ist und an einem inneren Ende (6) der Welle (4) angebracht ist, um in ein Zahnrad (25) einzugreifen, das mit der Rotationsachse (26) der Scheibe (23) in der dritten Position (T2) der Welle (4) derart verbunden ist, dass die Scheibe (23) bei der Rotation der Welle (4) gedreht wird.

## Claims

1. Device (1) for controlling the functions of a watch, the function control device (1) mainly comprising a crown (5) connected to a stem (4) for actuating means for selecting functions in a watch case, the crown (5) being located on an outer portion of the watch case, the function control device (1) comprising, integrated in a watch movement, an optical action system (2) actuated in one position of the stem (4) from among three possible defined positions (T0, T1, T2) of the stem (4) in order to determine the direction of rotation of the stem (4), and an electronic mechanical arrangement (3) for controlling functions in all three positions of the stem (4), said electronic mechanical arrangement (3) comprising a guide element (13) mounted to rotate about a rotating arbor (14) on a support (12) connected to a plate of the watch movement, the generally flat-shaped guide element (13) having a rounded end (15) arranged in a circular annular groove (8) of an intermediate portion of the stem (4) to be driven in rotation during the movement of the stem (4) in one or other of the three defined positions, and a selection part (31) mounted to rotate about another rotating arbor (35) on the support (12) and above the annular groove of the stem and intended to be driven in rotation by the rounded end (15) of the guide element (13) of sufficient thickness to also be housed inside a U-shaped opening (32) of one end of the selection part (31), the selection part (31) comprising at least one electrically conductive contactor (33) arranged on an opposite side to the U-shaped end so as to contact a first electrical terminal (36) on a printed circuit board (20) in a first position (T0) of the stem (4), to have no electrical contact in a second position (T1) of the stem (4), and to contact a second electrical terminal (37) on the printed circuit board (20) in a third position (T2) of the stem (4).

2. Device (1) according to claim 1, **characterized in that** the selection part (31) is an electrically conductive metal part, **in that** said part comprises a first contactor (33) in the form of a metal strip, one end of which is connected to a body of the metal selection part (31) in proximity to the other rotating arbor (35), and another free end of the metal strip is capable of contacting a first electrical terminal (36) on a first metallized portion of an inner circular edge of a hole made through the printed circuit board (20) in a first position (T0) of the stem (4), or to contact a second electrical terminal (37) on a second metallized portion of the inner circular edge of the hole in a third position (T2) of the stem (4), or to have no contact with the first electrical terminal (36) or the second electrical terminal (37) in a second position (T1) of the stem (4).

3. Device (1) according to claim 2, **characterized in that** the body of the selection part (31) is substantially parallel to the printed circuit board (20), **in that** the metal strip of the first contactor (33) is arranged slightly offset underneath the body of the selection part (31) and the printed circuit board (20), **in that** the free end of the first contactor (33) comprises a raised finger (33') for contacting either the first electrical terminal (36), or the second electrical terminal (37) or not contacting the two electrical terminals (36, 37) depending on the position of the stem (4), and **in that** the diameter of the hole which comprises the two electrical terminals is defined as a function of the three positions of the stem (4) and of the movement of the free end of the first contactor (33) in each of the three positions.

4. Device (1) according to claim 1, **characterized in that** the selection part (31) is an electrically conductive metal part, **in that** said part comprises a first contactor (33) and a second contactor (34) which are each in the form of a metal strip, wherein one end of the first contactor (33) is connected to a body of the metal selection part (31) in proximity to the other rotating arbor (35), whereas one end of the second contactor (34) is connected to the body of the metal selection part (31) on an opposite side to the other rotating arbor (35), **in that** another free end of the metal strip of the first contactor (33) is capable of contacting a first electrical terminal (36) on an inner metallized edge of a first hole made through the printed circuit board (20) in a first position (T0) of the stem (4), whereas the second contactor (34) has no electrical contact in a second adjacent hole made through the printed circuit board (20), the second hole comprising a second electrical terminal (37) on a metallized inner edge of said second hole, **in that** another free end of the metal strip of the second contactor (34) is capable of contacting the second electrical terminal (37) on the metallized inner edge of said second hole in a third position (T2) of the stem (4), whereas the first contactor (33) has no electrical contact in the first hole, and **in that** the first contactor (33) and the second contactor (34) have no electrical contact with the first electrical terminal (36) and with the second electrical terminal (37) in a second position (T2) of the stem (4).

5. Device (1) according to claim 4, **characterized in that** the body of the selection part (31) is substantially parallel to the printed circuit board (20), **in that** the metal strip of the first contactor (33) and the metal strip of the second contactor (34) are arranged slightly offset and underneath the selection part (31) and the printed circuit board (20), **in that** the free end of the first contactor (33) comprises a raised finger (33') for contacting the first electrical terminal (36) of the first hole in the first position (T0) of the stem (4), **in that** the free end of the second contactor (34) comprises a raised finger (34') for contacting the second electrical terminal (37) of the second hole in the third position (T2) of the stem (4), and **in that** the diameter of the first hole and the diameter of the second hole are defined as a function of the three positions of the stem (4) and of the movement of the free end of the first contactor (33) and of the free end of the second contactor (34) in each of the three positions.

6. Device (1) according to claim 1, **characterized in that** each electrical contact of the first contactor (33) or of the first contactor (33) with a second contactor (34) of the selection part (31) against the first electrical terminal (36) in the first position (T0) of the stem (4) or against the second electrical terminal (37) in the third position (T2) of the stem (4) controls one microswitch connected to each electrical terminal in direct connection with a data processing circuit of the watch for setting various parameters, particularly the hour, the date, the minutes and seconds in one or other of the positions of the stem (4).

7. Device (1) according to claim 1, **characterized in that** the optical action system (2) is actuated in the third position (T2) of the stem (4) during the rotation of the stem (4), **in that** it comprises a first photo-reflector (21) and a second photo-reflector (22) electrically connected on the printed circuit board (20), **in that** the first photo-reflector (21) comprises at least one light emitting light source and one photoreceptor portion, **in that** the second photo-reflector (22) comprises one light emitting light source and one photoreceptor portion, **in that** the optical action system (2) further comprises a disc (23) mounted to rotate along at least one vertical axis perpendicular to the plane of the watch, and above the photo-reflectors (21, 22), **in that** the disc (23) comprises through openings (24) capable of allowing light to pass through one or other of the through openings (24) from the first photo-reflector (21) and/or the second photo-reflector (22) when said disc rotates above the photo-reflectors (21, 22) so that the light is reflected onto a reflective surface of a cover (10) above the through openings (24) of the disc (23), and **in that** the reflected light is captured by a photoreceptor portion of the first photo-reflector (21) and/or of the second photo-reflector (22), which are arranged on the printed circuit board (20) so as to output two quadrature signals determining the direction of rotation of the stem (4).

8. Device (1) according to claim 1, **characterized in that** the optical action system (2) is actuated in the third position (T2) of the stem (4) during the rotation of the stem (4), **in that** it comprises a first photo-reflector (21) and a second photo-reflector (22) electrically connected on the printed circuit board (20), **in that** the first photo-reflector (21) comprises at least one light emitting light source and one photoreceptor portion, **in that** the second photo-reflector (22) comprises a light emitting light source and a photoreceptor portion, **in that** the optical action system (2) further comprises a disc (23) mounted to rotate along at least one vertical axis perpendicular to the plane of the watch, and above the photo-reflectors (21, 22), **in that** the disc (23) has a coating of reflective portions (24') made on a surface of the disc (23) opposite the photo-reflectors (21, 22) one or other of the reflective portions (24') being capable of reflecting light from the light emitting light source of the first photo-reflector (21) and/or of the second photo-reflector (22) when the disc (23) rotates above the photo-reflectors (21, 22), and **in that** the reflected light is captured by a photoreceptor portion of the first photo-reflector (21) and/or of the second photo-reflector (22), which are arranged on the printed circuit board (20) so as to output two quadrature signals determining the direction of rotation of the stem (4).

9. Device (1) according to any of claims 7 and 8 **characterized in that** the through openings (24) or the reflective portions (24') are evenly distributed on a circular rim inside the disc (23).

10. Device (1) according to claim 9, **characterized in that** there are six angular sectors of 30° angle of through openings (24) or of reflective portions (24'), and each separated by a space also of 30° angle.

11. Device (1) according to any of claims 7 and 8, **characterized in that** the light emitting light source of the first photo-reflector (21) is arranged inside a first housing (21a) of the first photo-reflector (21), **in that** the photoreceptor portion of the first photo-reflector (21) is arranged inside a second housing (21b) of the first photo-reflector (21), **in that** the light emitting light source of the second photo-reflector (22) is arranged inside a first housing (22a) of the second photo-reflector (22), and **in that** the photoreceptor portion of the second photo-reflector (22) is arranged inside a second housing (22b) of the second photo-reflector (22).

12. Device (1) according to any of claims 7 and 8, **characterized in that** the stem (4) comprises a tubular-shaped sliding pinion (7) mounted at an inner end (6) of the stem (4) for meshing with a toothed wheel (25) connected to the rotating arbor (26) of the disc (23) in the third position (T2) of the stem (4) in order to rotate the disc (23) during the rotation of the stem (4).
